# EUROPÄISCHE PATENTSCHRIFT

(11) **EP 3 870 313 B1**
(45) Veröffentlichungstag und Bekanntmachung des Hinweises auf die Patenterteilung: **18.03.2026**
(21) Anmeldenummer: 19795496.9
(22) Anmeldetag: 23.10.2019
(51) Int. Cl.: A62C 2/06, F16L 5/04, E04B 1/94, E06B 5/16

(54) **VERBUNDWERKSTOFF UND BRANDSCHUTZELEMENT ZUM ABDICHTEN VON DURCHGANGSÖFFNUNGEN UND FUGEN IN BAUELEMENTEN**
COMPOSITE MATERIAL AND FIRE PROTECTION ELEMENT FOR SEALING HOLES AND GAPS IN STRUCTURAL ELEMENTS
MATIÈRE COMPOSITE ET ÉLÉMENT DE PROTECTION CONTRE L'INCENDIE PERMETTANT D'ÉTANCHÉIFIER LES OUVERTURES DE PASSAGE ET LES JOINTS DES COMPOSANTS

(30) Priorität: 24.10.2018 EP 18202290
(43) Veröffentlichungstag der Anmeldung: 01.09.2021
(73) Patentinhaber: Hilti Aktiengesellschaft, 9494 Schaan (LI)
(72) Erfinder: SIMON, Sebastian, 86807 Buchloe Lindenberg (DE); AHLERS, Andreas, 87679 Westendorf (DE); PREM, Ramona, 86836 Untermeitingen (DE); WILLNER, Ralf, 86874 Tussenhausen (DE); FREUDLING, Sarah, 86157 Augsburg (DE); ANDREAE, Sigrid, 9478 Azmoos (CH); WOLFER, Claudio, 9468 Say (CH); SCHREINER, Michael, 88147 Achberg (DE)
(74) Vertreter: Hilti Aktiengesellschaft Corporate Intellectual Property
(86) Internationale Anmeldenummer: PCT/EP2019/078785
(87) Internationale Veröffentlichungsnummer: WO 2020/083953

(56) Entgegenhaltungen:
- WO-A1-2018/016580
- JP-A- 2008 045 360

## Beschreibung

Die vorliegende Erfindung betrifft einen Verbundwerkstoff, ein Verfahren zu dessen Herstellung sowie ein Brandschutzelement enthaltend den erfindungsgemäßen Verbundwerkstoff zum Schutz von Durchgangsöffnungen und Fugen in Bauelementen im Brandfall, wie beispielsweise Gebäudeteilen, durch die Leitungen hindurchgeführt werden. Die vorliegende Erfindung betrifft ferner die Verwendung des Verbundwerkstoffes in Brandschutzelementen zur Abdichtung von Durchgangsöffnungen und/oder Fugen in Bauelementen.

Beim Verlegen von Leitungen, wie z.B. Rohrleitungen, elektrische Leitungen und dergleichen, werden diese durch Durchgangsöffnungen in Bauelementen, insbesondere Gebäudebauteilen, wie Wände und Decken, geführt. Um den Durchtritt von Feuer und Rauchgasen im Brandfall zu verhindern, werden zwischen den Innenwänden der Durchgangsöffnungen und den hindurchgeführten Leitungen sowie in Fugen Brandschutzelemente eingebracht. Diese Brandschutzelemente werden in der Regel mit intumeszierenden Materialien versehen oder aus diesen gebildet, so dass sich das Material bei Einwirkung von Wärme, wie sie im Brandfall auftritt, ausdehnt und dadurch die Leitung abdrückt und die Durchgangsöffnung in dem Bauelement verschließt.

In der Regel weisen die Brandschutzelemente ein Trägermaterial auf, dem für die Zwecke des Brandschutzes Additive zugesetzt werden, die bei erhöhter Temperatur, wie etwa im Brandfall, expandieren bzw. intumeszieren und in Zusammenspiel mit dem Trägermaterial und ggf. weiteren Additiven eine isolierende Schicht bilden und somit die ggf. entstehende Öffnung verschließen.

In den bekannten Brandschutzelementen wird häufig ein physikalisch wirkendes Treibmittel eingesetzt. Dieses ist üblicherweise zufällig auf einer oder mehreren Flächen der Oberfläche des Trägermaterials und/oder innerhalb des Trägermaterials verteilt. Häufig weisen die physikalisch wirkenden Treibmittel eine strukturelle Anisotropie auf, was bedeutet, dass sie beispielsweise in Form von Plättchen oder Fasern vorliegen können. In bekannten Brandschutzelementen wird diese strukturelle Anisotropie nicht berücksichtigt, so dass das physikalisch wirkende Treibmittel auf einer oder mehreren Flächen der Oberfläche und/oder innerhalb des Trägermaterials zufällig orientiert bzw. ausgerichtet vorliegt. Das physikalisch wirkende Treibmittel zeigt somit keine Vorzugsorientierung. Man spricht in diesem Fall auch von einer isotropen oder statistischen Ausrichtung bzw. Orientierung des physikalisch wirkenden Treibmittels auf einer oder mehreren Flächen der Oberfläche des Trägermaterials und/oder innerhalb des Trägermaterials.

Durch die zufällige Orientierung des physikalisch wirkenden Treibmittels auf einer oder mehreren Flächen der Oberfläche bzw. innerhalb des Trägermaterials, geschieht im Brandfall eine Expansion bzw. Intumeszenz des physikalisch wirkenden Treibmittels im Wesentlichen gleichmäßig in alle drei Raumrichtungen. Bei Brandschutzelementen, die beispielsweise zum Abdichten von Durchgangsöffnungen verwendet werden, wird jedoch eine verstärkte Expansion in Richtung der zu verschließenden Durchgangsöffnung benötigt. Die Expansion in alle drei Raumrichtungen führt bei bekannten Brandschutzelementen dazu, dass ein Großteil des expandierten Materials seitlich aus der Durchgangsöffnung herausgedrückt wird und somit nur ein geringer Druck in Richtung der Durchgangsöffnung ausgeübt wird. Zudem ist das aus der Durchgangsöffnung herausgedrückte Material ungeschützt und daher mechanischen Belastungen ausgesetzt, wie beispielsweise einem Löschwasserstrahl, Luftströmungen, hervorgerufen durch einen Brand oder dergleichen, so dass der herausgedrückte Anteil des expandierten Materials im Brandfall nicht beständig ist. Weiterhin ist durch das seitliche Herausdrücken des Materials aus der Durchgangsöffnung die Geschwindigkeit des Zusammendrückens der durchgeführten Leitung reduziert, so dass im Brandfall eine kurze Verschlusszeit nicht gewährleistet ist.

In bestehenden Brandschutzelementen wird versucht das Problem des Herausdrückens des expandierten Materials durch eine entsprechende Formgebung des Gehäuses des Brandschutzelements oder den Einsatz von Gewebe, welches das expandierte Material umschließt, zu verhindern.

So beschreibt die EP 3 260 678 A1 ein streifenförmiges Brandschutzelement, in dem eine Innenlage aus intumeszierenden Material zumindest über einen Teil ihrer Breite mit einem Verstärkungsmaterial versehen ist, so dass durch das Umbiegen im Bereich der Verstärkungseinlage eine Umklappkante ausgebildet wird, die die Verstärkungseinlage außenseitig umgibt.

Die DE 2004 055 928 B4 beschreibt eine Brandschutzmanschette, bei der eine Transporteinrichtung vorgesehen ist, die unter Wärmeeinwirkung expandierendes Material im Brandfall von einer Stützeinrichtung in die Richtung auf das Innere der Durchführung verlagert.

In einem anderen Ansatz wird die Geometrie der Brandschutzelemente so gestaltet, dass ein besserer Wärmeeintrag zustande kommt, wodurch eine frühere Expansion des intumeszierenden Materials stattfindet. Entsprechende Brandschutzelemente sind beispielsweise in der EP 1 273 841 A1, DE 10 2008 031 018 A1 und DE 20 2012 003 405 U1 beschrieben.

Mit den bekannten Brandschutzelementen kann das seitliche Herausdrücken des expandierten Materials zwar verringert werden, aber nicht unterbunden werden, so dass es weiterhin zu einem Verlust an Material kommt, welches nicht für den Verschluss der Durchgangsöffnung zur Verfügung steht. Zusätzlich führt das seitliche Herausdrücken des expandierten Materials zu einer Querverdichtung des expandierten Materials, wodurch die Expansion des physikalisch wirkenden Treibmittels zur Durchgangsmitte zum Verschluss des Durchgangs behindert wird. Ferner entsteht bei diesen Brandschutzelementen eine Verdichtung der physikalisch wirkenden Treibmittel durch Kompression an den Wandungen bzw. an den Gewebeflächen des Brandschutzelements. Diese komprimierten Bereiche haben ein vermindertes Expansionspotential, welches im Brandfall nicht mehr für den Durchgangsverschluss zur Verfügung steht. Ferner sorgt die Verdichtung zu einer Zunahme der Wärmeleitfähigkeit, wodurch ein schnellerer Temperaturanstieg an der brandabgewandten Seite auftritt, mit dem ein erhöhtes Risiko für einen Feuerübertritt einhergeht.

Im Dokument WO2018/016580 A1 wird ein feuerfester Formkörper offenbart. Der feuerfeste Formkörper umfasst Blähgraphit, welches in ein thermoplastisches Harz oder ein Elastomer eingebettet ist. Der beschriebene Formkörper ist durch die Ausrichtung der longitudinalen Richtung der einzelnen Blähgraphitteilchen in Bezug auf die Fertigungsrichtung (*"machine direction (MD)*") charakterisiert, wobei bei 100facher Vergrößerung der Unterschied zwischen der longitudinalen Ausrichtung jedes einzelnen Blähgraphitplättchens und der Fertigungsrichtung maximal ± 10° beträgt. Gemäß der Lehre dieses Dokumentes müssen die Blähgraphitplättchen entlang der Fertigungsrichtung ausgerichtet werden und es verbietet sich ein senkrechtes Aufrichten der Blähgraphitteilchen aus der Fertigungsebene. Innerhalb der Fertigungsebene können die Blähgraphitteilchen jedoch frei um 360° entlang ihrer longitudinalen Ausrichtung (longitudinalen Achse) rotiert vorliegen, wodurch im Brandfall eine radial ungerichtete Expansion stattfindet.

Die zuvor beschriebenen Nachteile kommen insbesondere bei Brandschutzelementen für größere Öffnungsquerschnitte zum Tragen. Bei diesen Brandschutzelementen werden große Mengen an physikalisch wirkenden Treibmitteln eingesetzt, um einen zuverlässigen Verschluss der Durchgangsöffnung im Brandfall zu gewährleisten. Die zuvor beschriebenen Probleme sind daher hier im verstärktem Maß zu beobachten. Zusätzlich weisen diese Brandschutzelemente teilweise ein hohes Gewicht auf, wodurch deren Installation erschwert wird. Zusätzlich ist die Verwendung von großen Mengen an physikalisch wirkenden Treibmitteln sowohl unter ökologischen als auch wirtschaftlichen Gesichtspunkten von Nachteil.

Es besteht daher Bedarf an einer Lösung zur zuverlässigen Abdichtung, insbesondere gegen Rauch und Feuer, eines Zwischenraumes zwischen einer Innenfläche einer Durchgangsöffnung und einer hindurchgeführten Leitung im Brandfall, mit der erreicht werden kann, dass bei der Expansion des physikalisch wirkenden Treibmittels dieses in verringertem Maß aus dem Zwischenraum herausgedrückt wird und folglich die hindurchgeführte Leitung in verstärktem Maße abgedrückt wird.

Ferner ist es Aufgabe der vorliegenden Erfindung eine Lösung für den Einsatz in einem oder als Brandschutzelement zur Verfügung zu stellen, welche eine Verringerung des Materialeinsatzes, insbesondere der Menge an physikalisch wirkenden Treibmittel(n), ermöglicht, ohne die Performance des Brandschutzelementes, insbesondere dessen Verschlussfähigkeit, im Brandfall zu beeinträchtigen. Es ist insbesondere Aufgabe der vorliegenden Erfindung eine Lösung zur Verfügung zu stellen, mit der eine Verringerung der Menge des physikalisch wirkenden Treibmittels im Brandschutzelement ermöglicht wird und mit der gleichzeitig eine verbesserte Performance des Brandschutzelements im Brandfall, insbesondere eine verbesserte Verschlussfähigkeit, erreicht werden kann.

Diese Aufgabe wird durch einen Verbundwerkstoff nach Anspruch 1 sowie durch ein Brandschutzelement gemäß dem nebengeordneten Anspruch 14 sowie durch eine Verwendung nach nebengeordneten Anspruch 15 gelöst.

Gemäß einem ersten Aspekt der Erfindung ist ein Verbundwerkstoff vorgesehen, umfassend
i) ein Trägermaterial und
ii) eine Vielzahl an Teilchen mindestens eines schichtartig aufgebauten, physikalisch wirkenden Treibmittels,
wobei über den gesamten Verbundwerkstoff jeweils zueinander benachbarte Teilchen des schichtartig aufgebauten, physikalisch wirkenden Treibmittels im Wesentlichen parallel zueinander angeordnet sind.

Eine Idee des obigen Verbundwerkstoffes besteht darin, ein strukturell anisotrop aufgebautes, physikalisch intumeszierendes Material (schichtartig aufgebautes, physikalisch wirkendes Treibmittel) mit einem Trägermaterial zu kombinieren und die strukturelle Anisotropie des physikalisch intumeszierenden Materials mittels Ausrichtung bzw. Orientierung der Teilchen zu nutzen, um damit Einfluss auf die Richtung der Expansion im Brandfall zu nehmen und diese somit gezielt steuern zu können. Bei den im Rahmen der vorliegenden Erfindung verwendeten schichtartig aufgebauten, physikalisch wirkenden Treibmitteln erfolgt die Expansion im Brandfall im Wesentlichen in eine Richtung, nämlich senkrecht zu den einzelnen Schichten aus denen das physikalisch wirkende Treibmittel aufgebaut ist. Werden nunmehr jeweils zueinander benachbarte Teilchen des schichtartig aufgebauten, physikalisch wirkenden Treibmittels über den gesamten Verbundwerkstoff im Wesentlichen parallel zueinander angeordnet, findet bei Wärmeeintrag eine Expansion im Wesentlichen senkrecht zu den parallel ausgerichteten Teilchen statt und es ist möglich, die Expansion in eine gewünschte Richtung zu lenken.

Zum besseren Verständnis der Erfindung werden die folgenden Erläuterungen der hierin verwendeten Terminologie als sinnvoll erachtet. Im Sinne der Erfindung:
- beschreibt der Begriff *"Verbundwerkstoff"* einen Werkstoff, der während der Herstellung durch stoffschlüssige Kombination unterschiedlicher Materialien erhalten wird und dessen chemische und physikalische Eigenschaften die der Einzelkomponenten übertreffen. Insbesondere ist im Sinne der vorliegenden Erfindung unter dem erfindungsgemäßen Verbundwerkstoff ein Brandschutzelement zu verstehen;
- beschreibt der Begriff *"Trägermaterial"* eine Zusammensetzung umfassend ein oder mehrere Polymere. Das Trägermaterial zeichnet sich dadurch aus, dass das oder die Polymere eine kontinuierliche Phase bilden;
- beschreibt der Begriff *"stoffschlüssig",* einen durch molekulare Kräfte entstehenden Schluss zwischen zwei Materialien, der diese so zusammenhält, dass sie in ihrer Gesamtheit einen festen Körper ergeben. Das Lösen einer stoffschlüssigen Verbindung ist vielfach nur unter Zerstörung der Elemente möglich, die über eine stoffschlüssige Verbindung miteinander verbunden waren.
- beschreibt der Begriff *"formschlüssig"* einen durch Ineinandergreifen von mindestens zwei Verbindungspartnern entstehenden Schluss zwischen zwei Materialien. Im Sinne der vorliegenden Erfindung kann ein Formschluss insbesondere dadurch hergestellt werden, indem die plastische Verformbarkeit des polymeren Trägermaterials genutzt wird, um ein Ineinandergreifen zu bewirken.
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt. Im Rahmen der vorliegenden Erfindung ist unter dem Begriff eines physikalisch wirkenden Treibmittels ein Material oder eine Komponente zu verstehen, die in der Lage ist, physikalische Intumeszenz beim Überschreiten einer bestimmten Temperatur, der sogenannten Aktivierungstemperatur, zu zeigen;
- bedeutet der Begriff *"thermische Expansion"* oder vereinfacht *"Expansion"* die durch physikalische und/oder chemische Intumeszenz hervorgerufene Volumenzunahme eines Materials oder einer Komponente;
- ist ein *"Polymer"* ein Molekül mit sechs oder mehr Wiederholungseinheiten, das eine Struktur aufweisen kann, die linear, verzweigt, sternförmig, gewunden, hyperverzweigt oder vernetzt sein kann; Polymere können eine einzelne Art von Wiederholungseinheiten aufweisen (*"*Homopolymere") oder sie können mehr als eine Art von Wiederholungseinheiten aufweisen (*"*Copolymere");
- bedeutet der Begriff *"Festkörpergehalt"* den Gehalt an nicht-flüchtigen Anteilen an einer Zusammensetzung. Die Bestimmung des Festkörpergehaltes wird nach DIN EN ISO 3251 (2008) durchgeführt;
- bedeutet *"enthalten"* und *"umfassen",* dass neben den genannten Bestandteilen noch weitere vorhanden sein können. Diese Begriffe sind einschließlich gemeint und umfassen daher auch den Begriff *"bestehen aus". "Bestehen aus"* ist abschließend gemeint und bedeutet, dass keine weiteren Bestandteile vorhanden sein können. In einer bevorzugten Ausführungsform bedeuten die Begriffe *"enthalten"* und *"umfassen"* den Begriff *"bestehen aus";*
- beschreibt ein durch Zahlen begrenzter Bereich, z.B. "5 bis 60 Gew.-%", dass die beiden Eckwerte und jeder Wert innerhalb dieses Bereichs einzeln offenbart sind.

Erfindungsgemäß umfasst der Verbundwerkstoff ein Trägermaterial. Das Trägermaterial umfasst vorzugsweise eine Polymerdispersion auf Wasser- oder Lösungsmittelbasis, insbesondere eine wässrige Polymerdispersion. Beispiele wässriger Polymerdispersionen, die sich in besonderem Maße bewährt haben, sind wässrige Acrylatdispersionen, wässrige Dispersionen bzw. Emulsionen von Harnstoff-, Formaldehyd- oder Melaminharzen, Polyvinylacetaten, Polyvinylalkoholen, Acrylnitril, Styrolacrylaten und ihrer Copolymere.

Bevorzugt enthält das Trägermaterial des erfindungsgemäßen Verbundwerkstoffs eine wässrige Acrylat-(Copolymer)-Dispersion, besonders bevorzugt eine wässrige Dispersion eines Polyalkyl-(meth)acrylats und/oder eines Alkyl(meth)acrylat-Copolymers. Vorzugsweise handelt es sich dabei um wässrige Dispersionen, die man durch Polymerisation, namentlich durch Emulsionspolymerisation von Alkyl(meth)acrylaten und/oder durch Copolymerisation von Alkyl(meth)acrylaten mit sich und/oder mit copolymerisierbaren Comonomeren, wie vorzugsweise (Meth)acrylsäure, (Meth)acrylamid, Styrol, Itaconsäure, Acrylnitril und/ oder Citraconsäure erhält, wobei die Alkylgruppen der Alkyl(meth)acrylate bevorzugt 1 bis 6 C-Atome, bevorzugter 1 bis 4 C-Atome aufweisen. Erfindungsgemäß besonders bevorzugt sind wässrige Dispersionen von Polybutylacrylat, Polyethylhexylacrylat oder Alkyl(meth)acrylat-Styrol-Copolymeren. Die Acrylat-(Copolymer)-Dispersion kann sowohl Homopolymere als auch Copolymere oder auch Mischungen von Homopolymeren und/oder Copolymeren enthalten und wird so vorzugsweise mit einem pH-Wert im Bereich von 7 bis 9, vorzugsweise einem pH-Wert von 8, welcher erforderlichenfalls mit verdünnter Natronlauge oder Ammoniaklösung eingestellt wird, mit den anderen Bestandteilen vermischt. Diese wässrige Acrylat- (Copolymer)-Dispersion besitzt vorzugsweise einen Festkörpergehalt von 40 bis 90 Gew.-%, stärker bevorzugt von 50 bis 80 Gew.-%. Die erfindungsgemäß bevorzugt eingesetzten Acrylat-(Copolymer)- Dispersionen sind dem Fachmann bekannt und im Handel erhältlich. Die Härtung erfolgt physikalisch durch Trocknen.

Es ist weiterhin bevorzugt, dass das Trägermaterial einen Erweichungs- oder Zersetzungspunkt im Temperaturbereich von 80 °C bis 500 °C, bevorzugt von 90 °C bis 400 °C, weiter bevorzugt von 110 °C bis 300 °C hat. Durch eine geeignete Wahl der Erweichungs- oder Zersetzungstemperatur des Trägermaterials können die Expansionseigenschaften des erfindungsgemäßen Verbundwerkstoffes beeinflusst werden. Tritt im Brandfall eine frühzeitige Erweichung bzw. Zersetzung des Trägermaterials ein, so führt dies gegebenenfalls zu einer Umorientierung des schichtartig aufgebauten, physikalisch wirkenden Treibmittels durch Verformen und/oder Schmelzen des Trägermaterials. Liegt die Erweichungs- oder Zersetzungstemperatur des Trägermaterial zu hoch, wird die Expansion des schichtartig aufgebauten, physikalisch wirkenden Treibmittels behindert.

Erfindungsgemäß umfasst der Verbundwerkstoff mindestens ein schichtartig aufgebautes, physikalisch wirkendes Treibmittel. Unter dem Begriff *"schichtartig aufgebaut"* wird im Sinne der vorliegenden Erfindung ein Material verstanden, welches strukturell anisotrop in Form von Schichten aufgebaut ist. Der schichtartige Aufbau kommt dadurch zustande, dass die Wechselwirkungen innerhalb einer Schicht wesentlich stärker ausgeprägt sind als zwischen den Schichten. Im Sinne der vorliegenden Erfindung bedeutet dies insbesondere, dass innerhalb der Schichten kovalente Bindungen vorliegen, wobei zwischen den Schichten nur schwache Wechselwirkung in Form elektrostatischer und/oder van-der-Waals-Kräfte wirken.

Das schichtartig aufgebaute, physikalisch wirkende Treibmittel umfasst eine Vielzahl von Teilchen. Es ist erfindungswesentlich, dass über den gesamten Verbundwerkstoff jeweils zueinander benachbarte Teilchen des schichtartig aufgebauten, physikalisch wirkenden Treibmittels im Wesentlichen parallel zueinander angeordnet sind. Vorzugsweise liegen die Teilchen des schichtartig aufgebauten, physikalisch wirkenden Treibmittels in Form von Plättchen vor, wobei die jeweils zueinander benachbarte Plättchen über den gesamten Verbundwerkstoff im Wesentlichen parallel zueinander angeordnet sind.

Für die vorliegende Erfindung ist es erfindungswesentlich, dass jeweils zueinander benachbarte Teilchen des schichtartig aufgebauten, physikalisch wirkenden Treibmittels über den gesamten Verbundwerkstoff im Wesentlichen parallel zueinander angeordnet sind. Im Brandfall expandiert das schichtartig aufgebaute, physikalisch wirkende Treibmittel im Wesentlichen senkrecht zu den Schichten, aus denen es aufgebaut ist. Eine im Wesentlichen parallele Ausrichtung jeweils zueinander benachbarter Teilchen sorgt dafür, dass die Expansion im Wesentlichen in eine Raumrichtung erfolgt. Die im Wesentlichen parallele Ausrichtung der Teilchen ermöglicht somit eine räumliche Steuerung des Expansionsverhaltens im Brandfall. Beim Einsatz des erfindungsgemäßen Verbundwerkstoffs als oder in einem Brandschutzelement ist es somit möglich, die Expansion verstärkt in Richtung der zu verschleißenden Durchgangsöffnung zu lenken und somit ein seitliches Herausdrücken aus der Durchgangsöffnung zu verringern bzw. zu unterbinden. Das eingesetzte schichtartig aufgebaute, physikalisch wirkende Treibmittel steht zu einem großen Teil für den Verschluss der Durchgangsöffnung zur Verfügung, so dass die Verschlussfähigkeit insgesamt verbessert wird, womit eine deutliche Reduktion des Materialeinsatzes an schichtartig aufgebautem, physikalisch wirkendem Treibmittel einhergeht.

Der Begriff *"über den gesamten Verbundwerkstoff'* im Sinne der vorliegenden Erfindung ist so zu verstehen, dass bei Betrachtung der Orientierung jeweils zueinander benachbarter Teilchen des schichtartig aufgebauten, physikalisch wirkenden Treibmittels eine Gesamtbetrachtung des Verbundwerkstoffes notwendig ist und diese parallele Orientierung jeweils zueinander benachbarter Teilchen im Wesentlichen für das gesamte Volumen des Verbundwerkstoffes vorliegen muss, um zum erfindungswesentlichen Effekt zu führen. Eine lokale, zufällige parallele Anordnung jeweils zueinander benachbarter Teilchen in Teilen des Verbundwerkstoffes führt nicht zum erfindungswesentlichen Effekt einer im Sinne der Erfindung gerichteten Expansion. Aufgrund der Tatsache, dass die Betrachtung der Orientierung jedoch auf Ebene der einzelnen Teilchen und den dazu jeweils benachbarten Teilchen stattfindet, ist es nicht zwingend erforderlich, dass alle Teilchen des schichtartig aufgebauten, physikalisch wirkenden Treibmittels eine im Wesentlichen parallele Ausrichtung haben. Kommt es beispielsweise bei der Anwendung zu einer Krümmung des Verbundwerkstoffes. sind die jeweils zueinander benachbarten Teilchen des schichtförmig aufgebauten, physikalisch wirkenden Treibmittels im Wesentlichen parallel angeordnet, wohingegen aufgrund der Krümmung des Verbundwerkstoffes nicht alle Teilchen im Wesentlichen parallel zueinander angeordnet sind.

Der Begriff *_{"}im Wesentlichen parallel"* im Sinne der vorliegenden Erfindung ist so zu verstehen, dass die jeweils zueinander benachbarten Teilchen nicht den streng mathematischen Anforderungen von parallelen Ebenen genügen müssen, sondern auch eine leichte Verkippung der Ebenen erlaubt ist. Auch bei einer leichten Verkippung der Ebenen ist der oben beschriebene Effekt einer im Wesentlichen in eine Raumrichtung auftretenden Expansion weiterhin gewährleistet. Ferner umfasst der Begriff *"im Wesentlichen parallel"* im Sinne der vorliegenden Erfindung auch, dass ein geringer Anteil jeweils zueinander benachbarter Teilchen nicht parallel angeordnet sein muss, was beispielsweise produktionstechnisch bedingt sein kann. Erfindungsgemäß zeigen mindestens 75 %, bevorzugter mindestens 80 %, bevorzugter mindestens 85 %, bevorzugter mindestens 90 %, bevorzugter mindestens 95 % der jeweils zueinander benachbarten Teilchen des schichtartig aufgebauten, physikalisch wirkenden Treibmittels eine parallele Anordnung zueinander.

Die im Wesentlichen parallele Anordnung der jeweils zueinander benachbarten Teilchen des schichtartig aufgebauten, physikalisch wirkenden Treibmittels über den gesamten Verbundwerkstoff kann durch visuelle Inspektion eines Verbundwerkstoffes, gegebenenfalls mit Hilfe eines Mikroskops, durch einen Fachmann bestimmt werden.

Eine Quantifizierung einer eventuell vorhandenen Verkippung kann theoretisch dadurch beschrieben werden, dass ein Lot (90°) auf ein willkürlich gewähltes Teilchen des schichtartig aufgebauten, physikalisch wirkenden Treibmittels gefällt wird. Bei einer Verschiebung dieses Lots zu Teilchen, die diesem Teilchen benachbart sind, tritt vorzugsweise eine maximale Winkelabweichung zu 90° von 25°, bevorzugter von 15°, bevorzugter von 10°, bevorzugter von 5° und noch weiter bevorzugt von 2° auf.

Unter dem Ausdruck *"jeweils zueinander benachbarter Teilchen"* im Sinne der vorliegenden Erfindung sind solche Teilchen zu verstehen, die in allen drei Raumrichtungen in direkter Nachbarschaft zu einem bestimmten Teilchen liegen, d.h. die innerhalb einer ersten Sphäre um ein Teilchen angeordnet sind. Vorzugsweise sind unter dem Ausdruck *"jeweils zueinander benachbarter Teilchen"* nicht nur die direkt benachbarten Teilchen zu verstehen, sondern auch solche Teilchen, die wiederum den direkt benachbarten Teilchen eines Teilchens direkt benachbart sind, d.h. Teilchen, die über die erste Sphäre hinausgehen und innerhalb einer zweiten Sphäre um ein Teilchen angeordnet sind.

Zur Bildung des erfindungsgemäßen Verbundwerkstoffes sind über den gesamten Verbundwerkstoff jeweils zueinander benachbarte Teilchen des schichtartig aufgebauten, physikalisch wirkenden Treibmittels im Wesentlichen parallel zueinander angeordnet. Daraus ergibt sich, dass im Verbundwerkstoff alle Teilchen des schichtartig aufgebauten, physikalisch wirkenden Treibmittels im Wesentlichen parallel zueinander angeordnet sein können. Dies stellt eine bevorzugte Ausführungsform der vorliegenden Erfindung da.

Eine im Wesentlichen parallele Ausrichtung aller Teilchen des schichtartig aufgebauten, physikalisch wirkenden Treibmittels ist jedoch nicht zwingend erforderlich, um den erfindungswesentlichen Effekt einer gezielten Expansion in im Wesentlichen eine Raumrichtung zu erzielen. Dies ist beispielsweise der Fall, wenn der Verbundwerkstoff in Form einer langen Bandage ausgestaltet ist, die beispielsweise um eine Leitungsdurchführung gewickelt wird, die durch eine Durchgangsöffnung hindurchführt. In diesem Fall sind die jeweils zueinander benachbarten Teilchen des schichtförmig aufgebauten, physikalisch wirkenden Treibmittels im Wesentlichen parallel angeordnet, wohingegen aufgrund der Wicklung und der damit einhergehenden Krümmung der Bandage nicht alle Teilchen im Wesentlichen parallel zueinander angeordnet sind. Sind die jeweils zueinander benachbarten Teilchen über den gesamten Verbundwerkstoff in diesem Fall in Längsrichtung der Bandage im Wesentlichen parallel zueinander angeordnet, findet die Expansion im Brandfall im Wesentlichen in Richtung des Zentrums der Durchgangsöffnung statt.

Zur Bildung des Verbundwerkstoffs kann das schichtartig aufgebaute, physikalisch wirkende Treibmittel innerhalb des Trägermaterials eingebettet sein und/oder auf einer oder mehreren Flächen der Oberfläche des Trägermaterials aufgebracht sein. In einer bevorzugten Ausführungsform ist das schichtartig aufgebaute, physikalisch wirkende Treibmittel innerhalb des Trägermaterials eingebettet. In einer alternativen bevorzugten Ausführungsform ist das schichtartig aufgebaute, physikalisch wirkende Treibmittel auf einer oder mehreren Flächen der Oberfläche des Trägermaterials aufgebracht. In einer weiteren bevorzugten Ausführungsform ist das schichtartig aufgebaute, physikalisch wirkende Treibmittel sowohl innerhalb des Trägermaterials eingebettet als auch auf einer oder mehreren Flächen der Oberfläche des Trägermaterials aufgebracht.

Vorzugsweise ist das schichtartig aufgebaute, physikalisch wirkende Treibmittel im Wesentlichen gleichmäßig innerhalb des Trägermaterials verteilt.

In einer anderen bevorzugten Ausführungsform kann die Konzentration des schichtartig aufgebauten, physikalisch wirkenden Treibmittels im Trägermaterial variieren. Die Konzentration des schichtartig aufgebauten, physikalisch wirkenden Treibmittels kann beispielsweise punktuell, musterartig flächig und/oder sandwichartig variant sein. Eine variable Konzentration hat den Vorteil, dass damit gezielt an bestimmten Stellen des Verbundwerkstoffes eine verstärkte Expansion erzielt werden kann. Ferner kann hierdurch ein gezielter Wärmetransport erzielt werden.

Das schichtartig aufgebaute, physikalisch wirkende Treibmittel kann je nach Anwendungsfall in einem sehr breiten gewichtsprozentualen Bereich in dem Verbundwerkstoff vorhanden sein. Es ist jedoch bevorzugt, dass das schichtartig aufgebaute, physikalisch wirkende Treibmittel in einer Menge von 10 bis 90 Gew.-%, bevorzugt von 15 bis 70 Gew.-%, besonderes bevorzugt von 20 bis 55 Gew.-%, bezogen auf das Gesamtgewicht des Festkörpergehaltes des Verbundwerkstoffs, im Verbundwerkstoff enthalten ist.

Die mittlere Teilchengröße des schichtartig aufgebauten, physikalisch wirkenden Treibmittels kann je nach Anwendungsfall in einem breiten Bereich liegen. Vorzugsweise hat das schichtartig aufgebaute, physikalisch wirkende Treibmittel eine mittlere Teilchengröße von 50 µm bis 4,0 mm, bevorzugt von 80 µm bis 3,5 mm und besonders bevorzugt von 100 µm bis 3,0 mm. Die mittlere Teilchengröße kann nach den dem Fachmann bekannten Methoden, wie beispielsweise mittels Siebanalyse nach DIN 66165 (2016), bestimmt werden.

Das schichtartig aufgebaute, physikalisch wirkende Treibmittel ist bevorzugt aus der Gruppe bestehend aus Graphit-Interkallationsverbindungen (auch bekannt als expandable graphite oder Blähgraphit), Schichtsilikat-Interkallationsverbindungen und Kombinationen davon ausgewählt, wobei Graphit-Interkallationsverbindungen oder blähfähiger Vermiculit bevorzugt sind.

Als Graphit-Interkallationsverbindungen kommen beispielsweise bekannte Einlagerungsverbindungen von SOₓ, NOₓ, Halogen, Essigsäure, Salpetersäure und/oder starken Säuren in Graphit in Frage. Diese werden auch als Graphitsalze bezeichnet. Bevorzugt sind Graphit-Interkallationsverbindungen, die bei Temperaturen (Aktivierungstemperaturen) von beispielsweise 120 bis 350°C unter Aufblähen SO₂, SOs, NO und/oder NO₂ abgeben. Für die vorliegende Erfindung geeignete Blähgraphite sind im Handel erhältlich.

Vorzugsweise haben die Graphit-Interkallationsverbindungen eine mittlere Teilchengröße von 50 µm bis 1,0 mm, bevorzugt von 70 µm bis 0,7 mm und besonders bevorzugt von 90 µm bis 0,5 mm.

Als Schichtsilikat-Interkallationsverbindungen (expandierbare Schichtsilikate) kommen beispielsweise solche Verbindungen in Betracht, die durch Einlagerung von Interkallationsverbindungen in native, blähfähige Schichtsilikate, insbesondere nativen Vermiculit, erhältlich sind. Als Interkallationsverbindung sind Vertreter der Alkoholate von Lithium und Kalium und Salze von Lithium, Natrium und Kalium mit organischen Säuren und/oder wässrige Lösungen dieser bevorzugt, die durch Kationenaustausch in das native Schichtsilikat einlagert werden. In dieser Hinsicht wird Bezug genommen auf die DE 1029083 A1 sowie die darin genannte Literatur, z.B. EP 0 429 246 A1 deren Inhalte hiermit in diese Anmeldung aufgenommen werden.

Vorzugsweise haben die Schichtsilikat-Interkallationsverbindungen eine mittlere Teilchengröße von 100 µm bis 4,0 mm, bevorzugt von 120 µm bis 3,5 mm und besonders bevorzugt von 150 µm bis 3,0 mm.

Es kann vorgesehen sein, dass das Trägermaterial weiterhin mindestens eine organische und/oder anorganische Faser umfasst. Diese sind bevorzugt aus der Gruppe bestehend aus Glasfaser, Keramikfaser, Carbonfaser, Polyamidfaser, Metallfaser, Borfaser, Naturfaser, Steinfaser und Mischungen davon, ausgewählt. Die Anwesenheit einer organischen und/oder anorganischen Faser im Trägermaterial erleichtert die Einarbeitung und Orientierung des schichtartig aufgebauten, physikalisch wirkenden Treibmittels in das Trägermaterial. Besonders geeignete Fasern sind Glasfasern und/oder Metallfasern, insbesondere aus E-Glas, Silikatfasern oder Mineralwollfasern.

Die organischen bzw. anorganischen Fasern haben bevorzugt eine Länge von 1 mm bis 25 mm, stärker bevorzugt von 2 mm bis 20 mm und besonders bevorzugt von 3 mm bis 15 mm. Beispielhaft können hier Glasfasern der Firma STW erwähnt werden.

Die organischen bzw. anorganischen Fasern sind bevorzugt in einer Menge von 0,1 bis 25,0 Gew.-%, bevorzugt von 0,5 bis 15,0 Gew.-%, besonderes bevorzugt von 1,0 bis 6,0 Gew.-% bezogen auf das Gesamtgewicht des Festkörpergehaltes des Verbundwerkstoffs, im Trägermaterial enthalten ist.

Es ist besonders bevorzugt, wenn die Längsausdehnung der organischen und/oder anorganischen Faser im Wesentlichen parallel zu den Teilchen des schichtartig aufgebauten, physikalisch wirkenden Treibmittels erfolgt. In diesem Fall unterstützen die organischen und/oder anorganischen Fasern im Brandfall den Effekt, dass die Expansion zielgerichtet in eine Raumrichtung erfolgt.

Da die im Brandfall gebildete Aschekruste unter Umständen zu instabil ist und daher abhängig von deren Dichte und Struktur etwa durch Luftströmungen verblasen werden kann, was sich negativ auf die abschottende Wirkung des Brandschutzelementes auswirkt, kann das Trägermaterial zusätzlich mindestens einen Aschekrustenstabilisator enthalten.

Ein **"***Aschekrustenstabilisator"* ist eine sogenannte gerüstbildende Verbindung, die das Kohlenstoffgerüst (Aschekruste), das aus dem physikalisch wirkenden Treibmittel und dem Trägermaterial gebildet wird, stabilisiert. Die prinzipielle Wirkungsweise ist dabei die, dass die an sich sehr weichen entstehenden Kohlenstoffschichten durch anorganische Verbindungen unter anderem mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abfallen verhindern, wodurch die isolierende Wirkung aufrechterhalten oder verstärkt wird.

Als Aschekrustenstabilisatoren bzw. Gerüstbildner kommen die üblicherweise in Brandschutzformulierungen verwendeten und dem Fachmann bekannten Verbindungen in Betracht, beispielsweise teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengröße von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, und/oder ein Borat, wie Zinkborat. Beispiele derartiger Additive finden sich auch in US 4 442 157 A, US 3 562 197 A, GB 755 551 A sowie EP 138 546 A1.

Bevorzugt ist der Aschekrustenstabilisator eine phosphorhaltige Verbindung, die unter Salzen und Derivaten der Oxosäuren des Phosphors ausgewählt ist. Die Oxosäuren des Phosphors werden eingesetzt, da deren Palette sehr groß ist. Bei den Oxosäuren des Phosphors handelt es sich um Phosphorsäure (H₃PO₄) (auch als Orthophosphorsäure bezeichnet), Diphospohrsäure (H₄P₂O₇) (auch als Pyrophosphorsäure bezeichnet), Triphosphorsäure (H₅P₃O₁₀), Polyphosphorsäure (Hₙ₊₂PₙO₃ₙ₊₁), Polymetaphosphorsäure ((HPO₃)ₙ), Hypophosphorsäure (H₄P₂O₆) (auch Diphosphor(IV)-säure), Diphosphor(III,V)-säure (H₄P₂O₆), Phosphonsäure (H₃PO₂(2)), wobei die Zahl in der Klammer die maximale Basigkeit der Säure bezeichnet, wenn diese sich von der Gesamtzahl der H-Atome in der Formel unterscheidet) (auch als phosphorige Säure bezeichnet), Diphosphonsäure (H₄P₂O₅(2)), wobei die Zahl in der Klammer die maximale Basigkeit der Säure bezeichnet, wenn diese sich von der Gesamtzahl der H-Atome in der Formel unterscheidet) (auch als diphosphorige Säure bezeichent), Phosphinsäure (H₃PO₂(1)), wobei die Zahl in der Klammer die maximale Basigkeit der Säure bezeichnet, wenn diese sich von der Gesamtzahl der H-Atome in der Formel unterscheidet.

Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminpolyphosphate, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen.

Der Aschekrustenstabilisator ist bevorzugt in einer Menge von etwa 5 bis 35 Gew.-%, bevorzugt 7 bis 30 Gew.-%, besonders bevorzugt 10 bis 28 Gew.-%, bezogen auf das Gesamtgewicht des Festkörpergehaltes des Verbundwerkstoffs, im Trägermaterial enthalten ist.

Darüber hinaus können weitere Brandschutzadditive, insbesondere solche, die eine chemische Intumeszenz bewirken, und solche, welche ablativ wirken, in der Zusammensetzung enthalten sein. Als *"chemische Intumeszenz"* wird die Bildung einer voluminösen, isolierenden Ascheschicht durch aufeinander abgestimmte Verbindungen, die bei Hitzeeinwirkung miteinander reagieren, bezeichnet. Diese sind im Allgemeinen ein Kohlenstofflieferant, ein Säurebildner und ein Gasbildner.

Als **"***Kohlenstofflieferant"* wird eine organische Verbindung bezeichnet, die durch unvollständige Verbrennung ein Kohlenstoffgerüst hinterlässt und nicht vollständig zu Kohlendioxid und Wasser verbrennt (Carbonifizierung). Diese Verbindungen werden auch als **"***Kohlenstoffgerüstbildner***"** bezeichnet. Als **"***Säurebildner"* wird eine Verbindung bezeichnet, die sich unter Hitzeeinwirkung, d.h. oberhalb etwa 150°C beispielsweise durch Zersetzung eine nicht flüchtige Säure bildet und dadurch als Katalysator für die Carbonifizierung wirkt. Zudem kann sie zur Erniedrigung der Viskosität der Schmelze des Trägermaterials beitragen. Hiermit gleichbedeutend wird der Begriff **"***Dehydrierungskatalysator***"** verwendet. Ein **"***Gasbildner***"** ist eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das erweichte Bindemittel zu einem Schaum aufbläht (Intumeszenz).

Gegebenenfalls kann das Trägermaterial weitere übliche Zusätze enthalten, wie Weichmacher, Füllstoffe, Pigmente, Additive zur Einstellung der rheologischen Eigenschaften, Verdickungsmittel, Dispergierhilfsmittel, Emulgatoren, Biozide, Fungizide, Konservierungs- und Alterungsschutzmittel, Frostschutzmittel, Netzmittel, Entschäumer und/oder Hautbildungsverzögerer. Diese weiteren Zusätze sind handelsübliche Produkte, die dem Fachmann bekannt sind.

Als Füllstoffe können die üblicherweise verwendeten und dem Fachmann bekannten Füllstoffe verwendet werden. Als Füllstoffe können beispielhaft erwähnt werden: Kreide, Bariumsulfat, Quarz, Talkum, Kaolin, Calciumsulfat und/oder Calciumsilikat. Der Füllstoff kann alleine oder als Gemisch von zwei oder mehreren verwendet werden.

Als Pigmente kann das Trägermaterial vorzugsweise Eisenoxid, Titandioxid, Zinksulfid, Zinkoxid und/oder organische oder anorganische Farbpigmente enthalten.

Als Additive zur Einstellung der rheologischen Eigenschaften kann das Trägermaterial beispielsweise hochdisperse Kieselsäure, Bentonite oder modifizierte Bentonite, Polyacrylate und/oder Cellulosederivate, wie Celluloseether, enthalten.

Die Additive können in einer Menge von etwa 0,25 bis 2,5 Gew.-%, bevorzugt 0,5 bis 1,7 Gew.-%, besonders bevorzugt 0,8 bis 1,6 Gew.-%, bezogen auf das Gesamtgewicht des Festkörpergehaltes des Verbundwerkstoffs, im Trägermaterial enthalten sein.

Gemäß einer bevorzugten Ausführungsform liegt der erfindungsgemäße Verbundwerkstoff als formbare Masse oder als Formteil vor, insbesondere in Form von Streifen, Ringen oder Platten, vor.

Vorzugsweise weist der Verbundwerkstoff eine maximale mittlere Schichtdicke von ≤ 10 mm, bevorzugter von ≤ 8 mm und besonders bevorzugt von ≤ 5 mm auf. In einer bevorzugten Ausführungsform hat der Verbundwerkstoff eine mittlere Schichtdicke von 0,5 mm bis 4,6 mm.

### Kurzbeschreibung der Zeichnungen

Ausführungsformen werden anhand der beigefügten Zeichnungen näher erläutert.
- Figur 1: zeigt eine Querschnittsdarstellung einer bevorzugten Ausführungsform eines erfindungsgemäßen Verbundwerkstoffes;
- Figur 2: zeigt schematisch eine dreidimensionale Darstellung eines erfindungsgemäß bevorzugten Verbundwerkstoffes;
- Figur 3: ist unterteilt in zwei Querschnittsdarstellungen (Fig. 3a und Fig. 3b) einer alternativen Ausführungsform eines erfindungsgemäßen Verbundwerkstoffes;
- Figur 4: zeigt eine Querschnittsdarstellung eines aus dem Stand der Technik bekannten Brandschutzelements;
- Figur 5: zeigt eine Photographie eines aus dem Stand der Technik bekannten Brandschutzelement mit Blähgraphit eingebettet in ein polymeres Trägermaterial;
- Figur 6: zeigt eine Querschnittsdarstellung einer weiteren Ausführungsform eines erfindungsgemäßen Verbundwerkstoffes;
- Figur 7: zeigt eine Querschnittsdarstellung einer weiteren Ausführungsform eines erfindungsgemäßen Verbundwerkstoffes;
- Figur 8: zeigt eine Fotographie eines Versuchsaufbaus;
- Figur 9: zeigt eine graphische Auswertung eines Vergleichs von Expansionsversuchen eines erfindungsgemäßen Verbundwerkstoffes mit aus dem Stand der Technik bekannten Brandschutzelementen.

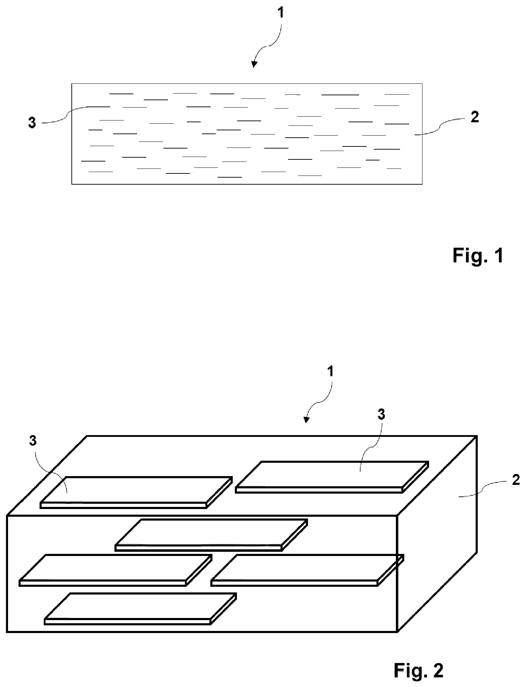

In Figur 1 ist eine Querschnittsdarstellung einer Ausführungsform eines erfindungsgemäßen Verbundwerkstoffes (1) aufgezeigt. Der Verbundwerkstoff (1) umfasst ein Trägermaterial (2) und mindestens ein schichtartig aufgebautes, physikalisch wirkendes Treibmittel (3). Zueinander benachbarte Teilchen des schichtartig aufgebauten, physikalisch wirkenden Treibmittels (3) sind im Wesentlichen parallel zueinander angeordnet. Das schichtartig aufgebaute, physikalisch wirkende Treibmittel (3) ist innerhalb des Trägermaterials (2) eingebettet und ist im Wesentlichen gleichmäßig innerhalb des Trägermaterials (2) verteilt.

Figur 2 zeigt eine dreidimensionale Darstellung eines erfindungsgemäß bevorzugten Verbundwerkstoffes (1). Die Teilchen des schichtartig aufgebauten, physikalischen Treibmittels (3) sind in der Form flacher Quader dargestellt. Jeweils zueinander benachbarte Teilchen des schichtartig aufgebauten, physikalischen Treibmittels (3) sind über den gesamten Verbundwerkstoff (1) parallel zueinander angeordnet. Figur 2 zeigt eine bevorzugte Ausführungsform, bei der alle Teilchen des schichtartig aufgebauten, physikalischen Treibmittels (3) über den gesamten Verbundwerkstoff (1) parallel zueinander angeordnet sind.

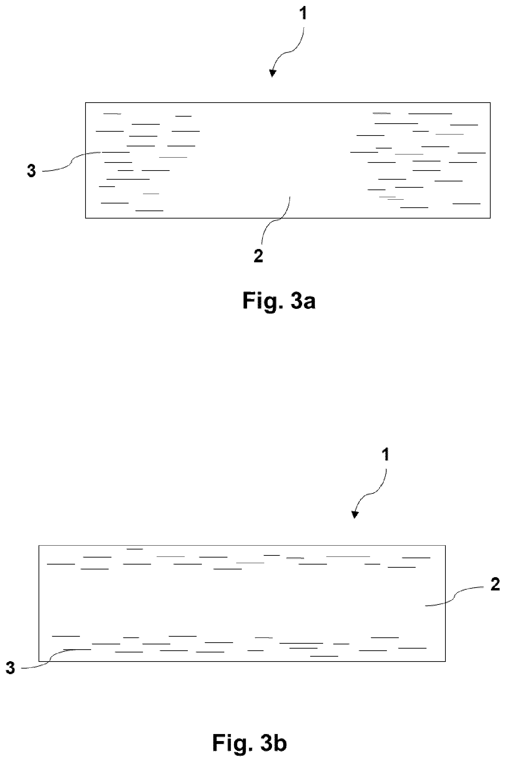

Figur 3 ist unterteilt in die zwei Querschnittsdarstellungen Fig. 3a und Fig. 3b, welche alternative Ausführungsformen eines erfindungsgemäßen Verbundwerkstoffes (1) aufzeigt. Der Verbundwerkstoff (1) umfasst ein Trägermaterial (2) und mindestens ein schichtartig aufgebautes, physikalisch wirkendes Treibmittel (3), wobei jeweils zueinander benachbarte Teilchen des schichtartig aufgebauten, physikalisch wirkenden Treibmittels (3) im Wesentlichen parallel zueinander angeordnet sind. Das schichtartig aufgebaute, physikalisch wirkende Treibmittel (3) ist innerhalb des Trägermaterials (2) eingebettet und die Konzentration des schichtartig aufgebauten, physikalisch wirkenden Treibmittels (3) innerhalb des Trägermaterials ist variant. Fig. 3a zeigt eine musterartig flächig variante Konzentration des schichtartig aufgebauten, physikalisch wirkenden Treibmittels (3). Fig. 3b zeigt eine sandwichartig variante Konzentration des schichtartig aufgebauten, physikalisch wirkenden Treibmittels (3).

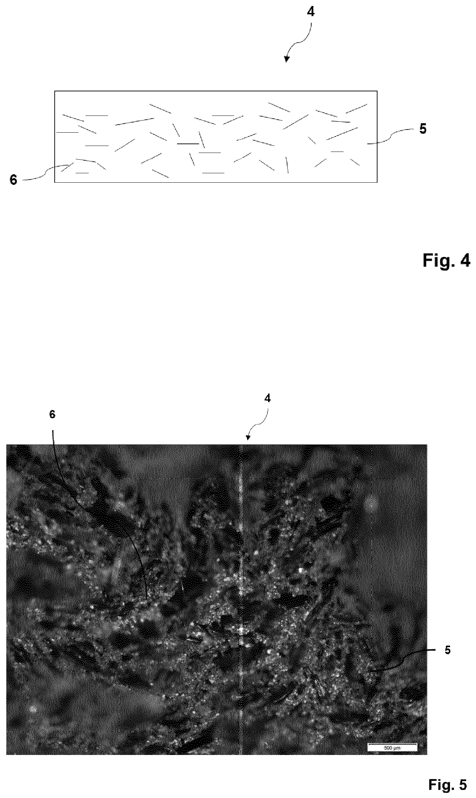

Figur 4 zeigt eine Querschnittsdarstellung eines aus dem Stand der Technik bekannten Brandschutzelements (4), welches ein Trägermaterial (5) und ein schichtartig aufgebautes, physikalisch wirkendes Treibmittel (6) umfasst. Das physikalisch wirkende Treibmittel (6) liegt zufällig orientiert bzw. ausgerichtet innerhalb des Trägermaterials (5) vor, d.h. es liegt eine statistische Ausrichtung bzw. Orientierung des physikalisch wirkenden Treibmittels (6) innerhalb des Trägermaterials vor.

Figur 5 zeigt eine Photographie einer mikroskopischen Analyse (25-fache Vergrößerung) eines aus dem Stand der Technik bekannten Verbundwerkstoffes, welches als intumeszierendes Inlay in einer Brandschutzmanschette verwendet wird (Hilti, CP644 Brandschutzmanschette, Schichtdicke des Verbundwerkstoffes 4,5 mm). Das Inlay wurde mittels Extrusion mit einem Standardmundstück hergestellt und umfasst eine Vielzahl an Blähgraphitteilchen, welche in ein polymeres Trägermaterial eingebettet sind. Die mikroskopische Analyse zeigt, dass die einzelnen Blähgraphitteilchen entlang der Fertigungsrichtung ausgerichtet sind. Eine Betrachtung des gesamten Inlays zeigt eine isotrope und zufällige Ausrichtung der einzelnen Blähgraphitteilchen entlang der Fertigungsebene, bei der an einzelnen lokalen Stellen zueinander benachbarte Blähgraphitteilchen parallel zueinander angeordnet sein können. Die Photographie zeigt, dass eine im Wesentlichen parallele Orientierung jeweils zueinander benachbarter Blähgraphitteilen über das gesamte Inlay nicht gegeben ist.

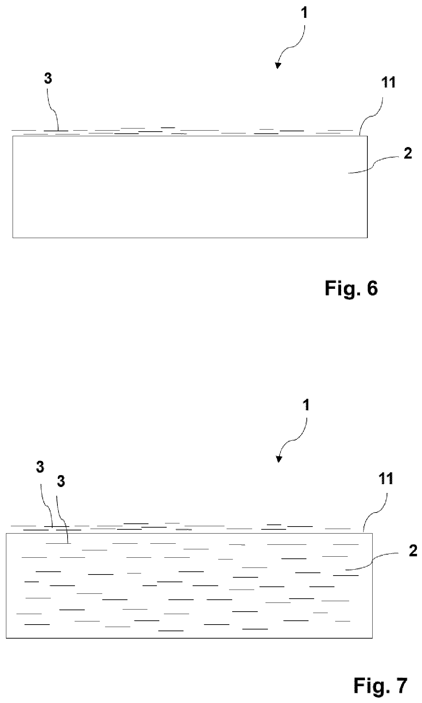

Figur 6 zeigt eine Querschnittsdarstellung einer weiteren alternativen Ausführungsform eines erfindungsgemäß bevorzugten Verbundwerkstoffs (1). Der Verbundwerkstoff (1) umfasst ein Trägermaterial (2) und mindestens ein schichtartig aufgebautes, physikalisch wirkendes Treibmittel (3). Das schichtartig aufgebaute, physikalisch wirkende Treibmittel (3) ist auf einer Fläche (11) der Oberfläche des Trägermaterials (2) aufgebracht. Zueinander benachbarte Teilchen des schichtartig aufgebauten, physikalisch wirkenden Treibmittels (3) sind im Wesentlichen parallel zueinander angeordnet.

Figur 7 zeigt eine Querschnittsdarstellung einer weiteren alternativen Ausführungsform eines erfindungsgemäß bevorzugten Verbundwerkstoffs (1). Der Verbundwerkstoff (1) umfasst ein Trägermaterial (2) und mindestens ein schichtartig aufgebautes, physikalisch wirkendes Treibmittel (3). Das schichtartig aufgebaute, physikalisch wirkende Treibmittel (3) ist sowohl innerhalb des Trägermaterials (2) eingebettet als auch auf einer Fläche (11) der Oberfläche des Trägermaterials (2) aufgebracht. Zueinander benachbarte Teilchen des eingebetteten als auch des auf der Oberfläche aufgebrachten schichtartig aufgebauten, physikalisch wirkenden Treibmittels (3) sind im Wesentlichen parallel zueinander angeordnet.

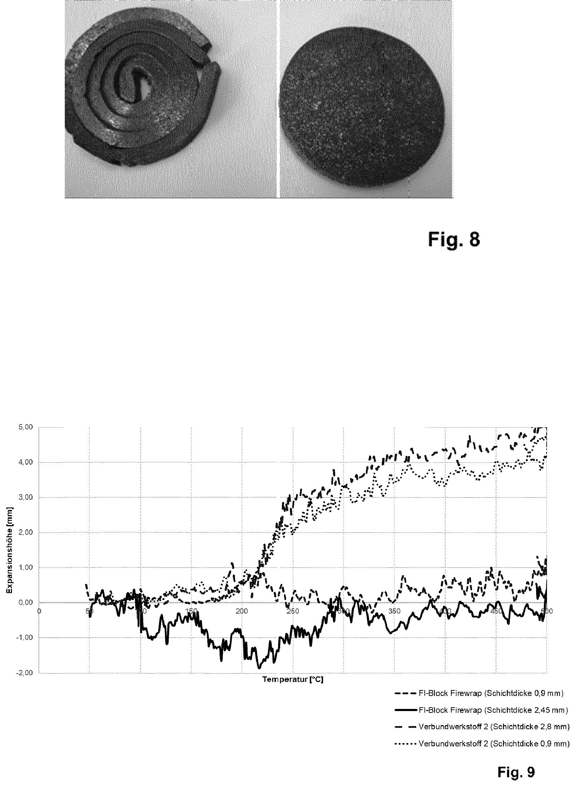

Figur 8 zeigt eine Fotographie eines Versuchsaufbaus, mit dem die im Wesentlichen parallele Anordnung jeweils benachbarter Teilchen des schichtartig aufgebauten, physikalisch wirkenden Treibmittels über den gesamten Verbundwerkstoff nachgewiesen werden kann.

Figur 9 zeigt die graphische Auswertung der Expansionsversuche eines erfindungsgemäßen Verbundwerkstoffes im Vergleich zu aus dem Stand der Technik bekannten Brandschutzelementen.

Die Erfindung ist nicht auf die gezeigten Ausführungsformen beschränkt. Insbesondere können einzelne Merkmale einer Ausführungsform unabhängig von den anderen Merkmalen der entsprechenden Ausführungsform in einer weiteren erfindungsgemäßen Ausführungsform enthalten sein, d.h. die beschriebenen Merkmale sind beliebig miteinander kombinierbar.

Gemäß einem zweiten Aspekt der vorliegenden Erfindung ist ein Verfahren zur Herstellung des erfindungsgemäßen Verbundwerkstoffes vorgesehen. Das erfindungsgemäße Verfahren umfasst die folgenden Schritte:
i) Bereitstellen eines Trägermaterials,
ii) Bereitstellen eines schichtartig aufgebauten, physikalisch wirkenden Treibmittels,
iii) Verbinden des Trägermaterials und des schichtartig aufgebauten, physikalisch wirkenden Treibmittels,
iv) Optional Vermischen des Trägermaterials und des schichtartig aufgebauten, physikalisch wirkenden Treibmittels,
dadurch gekennzeichnet, dass über den gesamten Verbundwerkstoff jeweils zueinander benachbarte Teilchen des schichtartig aufgebauten, physikalisch wirkenden Treibmittels durch Einwirken einer Kraft im Wesentlichen parallel zueinander angeordnet werden.

Die im Wesentlichen parallele Anordnung jeweils zueinander benachbarter Teilchen des schichtartig aufgebauten, physikalisch wirkenden Treibmittels über den gesamten Verbundwerkstoff durch das Einwirken einer Kraft kann in Schritt ii) passieren, d.h. dass jeweils zueinander benachbarte Teilchen des schichtartig aufgebauten, physikalisch wirkenden Treibmittels bereits im Wesentlichen parallel zueinander angeordnet sind bevor eine Verbindung mit dem Trägermaterial in Schritt (iii) erfolgt.

Alternativ kann die im Wesentlichen parallele Anordnung jeweils zueinander benachbarter Teilchen des schichtartig aufgebauten, physikalisch wirkenden Treibmittels über den gesamten Verbundwerkstoff durch das Einwirken einer Kraft während und/oder im Anschluss an die Schritte iii) und/oder iv) passieren. In diesem Fall werden jeweils zueinander benachbarte Teilchen des schichtartig aufgebauten, physikalisch wirkenden Treibmittels erst im Wesentlichen parallel angeordnet, nachdem das Trägermaterial und das schichtartig aufgebaute, physikalisch wirkende Treibmittel miteinander verbunden wurden. Es ist aber auch möglich, dass das Einwirken einer Kraft sowohl in Schritt ii) als auch während und/oder im Anschluss an die Schritte iii) und/oder iv) passiert.

Vorzugsweise ist die auf das schichtartig aufgebaute, physikalisch wirkende Treibmittel einwirkende Kraft ausgewählt aus der Gruppe bestehend aus einer oder mehreren mechanischen Kräften, einer oder mehreren elektrischen Kräften, einer oder mehreren elektromagnetischen Kräften und Kombinationen davon. Dabei kommt prinzipiell jedes Aufbringen einer Kraft in Betracht, die es ermöglicht eine im Wesentlichen parallele Anordnung jeweils zueinander benachbarter Teilchen des schichtartig aufgebauten, physikalisch wirkenden Treibmittels über den gesamten Verbundwerkstoff vorzunehmen. Beispielhaft kann dies realisiert werden durch Streichen, Bepinseln, Sprühen, Rakeln, Sedimentation, Abfiltrieren, Zentrifugieren, Rütteln, Ultraschall, Vibration und/oder die Anwendung von Strom und/oder Magnetismus. Es ist bevorzugt, dass eine im Wesentlichen parallele Ausrichtung der jeweils zueinander benachbarten Teilchen des schichtartig aufgebauten, physikalisch wirkenden Treibmittels über den gesamten Verbundwerkstoff mittels Extrusion/Strangpressen mit geformten Mundstücken in speziellen Geometrien und/oder mittels eines Kalanders (Walzen) durchgeführt wird.

Der erfindungsgemäße Verbundwerkstoff ist dazu geeignet als Brandschutzelement eingesetzt zu werden oder in ein Brandschutzelement integriert zu werden. Demnach ist gemäß einem dritten Aspekt der vorliegenden Erfindung ein Brandschutzelement vorgesehen, welches den erfindungsgemäßen Verbundwerkstoff umfasst.

Das erfindungsgemäße Brandschutzelement kann in allen Formen ausgestaltet sein, die geometrisch den Einsatz als Brandschutzelement ermöglichen. In einer bevorzugten Ausführungsform ist das Brandschutzelement streifenförmig ausgestaltet und liegt in Form einer Endlosbandage vor.

Das erfindungsgemäße Brandschutzelement kann ein oder mehrere erfindungsgemäße Verbundwerkstoffe umfassen. Umfasst das Brandschutzelement mehr als einen Verbundwerkstoff ist es vorteilhaft, dass bei einer Schichtung von zwei oder mehr Verbundwerkstoffen, eine Funktionsschicht zwischen den Verbundwerkstoffen angeordnet wird, wobei es weiterhin vorteilhaft ist, dass die Schichten des Verbundwerkstoffes und die Funktionsschicht im Wesentlichen stoff- und/oder formschlüssig miteinander verbunden sind. Die Funktionsschicht erstreckt sich vorzugsweise kontinuierlich zwischen den zwei oder mehr Verbundwerkstoffen. Vorzugsweise umfasst die Funktionsschicht mindestens ein semi-rigides Material bzw. bevorzugt besteht die Funktionsschicht aus mindestens einem semi-rigiden Material besteht. Unter dem Ausdruck **"***semi-rigides Materiaf***"** im Sinne der vorliegenden Erfindung ist ein Material zu verstehen, welches sowohl eine ausreichende mechanische Festigkeit aufweist, um den von dem Verbundwerkstoff ausgehenden Blähdruck aufnehmen zu können ohne ganz oder teilweise aufgerissen zu werden, als auch eine ausreichende Flexibilität, so dass die Expansion des schichtartig aufgebauten, physikalisch wirkenden Treibmittels nicht behindert wird. Es hat sich als vorteilhaft erwiesen, dass das semi-rigide Material ausgewählt ist aus der Gruppe bestehend aus Streckmetall, Glasfaser, Aluminiumfolie und Kombinationen daraus.

Gegenstand der vorliegenden Erfindung ist ferner die Verwendung eines erfindungsgemäßen Verbundwerkstoffes als Brandschutzelement zur Abdichtung von Durchgangsöffnungen und/oder Fugen in Bauelementen.

Ein weiterer Gegenstand der vorliegenden Erfindung ist die Verwendung eines schichtartig aufgebauten, physikalisch wirkenden Treibmittels in einem Brandschutzelement, wobei über das gesamte Brandschutzelement jeweils zueinander benachbarte Teilchen des schichtartig aufgebauten, physikalisch wirkenden Treibmittels im Wesentlichen parallel zueinander angeordnet sind, zur Verbesserung der Performance des Brandschutzelements, insbesondere zur Erhöhung der Verschlussfähigkeit des Brandschutzelements beim Einsatz der gleichen oder einer verringerten Menge an schichtartig aufgebauten, physikalisch wirkenden Treibmittel.

Die Erfindung wird anhand der nachfolgenden Beispiele näher erläutert.

### AUSFÜHRUNGSBEISPIELE

Es wurde eine Formulierung mit der nachstehenden Tabelle 1 aufgeführten Bestandteilen hergestellt, in dem die angegebenen Bestandteile miteinander vermischt wurden. Die hergestellte Formulierung umfasst ein Trägermaterial sowie ein schichtartig aufgebautes, physikalisch wirkendes Treibmittel und diese dient als Ausgangsmaterial zur Herstellung der erfindungsgemäßen Verbundwerkstoffe.

**Tabelle 1: Bestandteile Formulierung zur Herstellung erfindungsgemäßer Verbundwerkstoff [Gew.-%]**

| | **1** |
|---|---|
| Wässrige Acrylat-Dispersion (65 % Acrylat und 35% Wasser) | 38,1 |
| Blähgraphit (Kaisersberg) | 26,5 |
| Glasfaser Kurzschnitt (Durchmesser ~10µm, Länge 6 mm) | 4,4 |
| Ammoniumpolyphosphat | 18,3 |
| Melaminpolyphosphat | 5,3 |
| Di-Pentaerythritol | 7,4 |

Zur Herstellung eines erfindungsgemäßen Verbundwerkstoffes wurde eine definierte Menge der obigen Formulierung auf eine PE-Folie mit einer glatten Oberfläche aufgebracht und anschließend das Ausgangsmaterial durch Umschlagen der PE-Folie beidseitig bedeckt. Das mit PE-Folie bedeckte Ausgangsmaterial (Schichtdicke 10 mm) wurde mit einem Kalander (Abstand der Walzen im Kalander zwischen 0,5 mm und 10,0 mm) bearbeitet. Der Abstand der Walzen des Kalanders wurde in Schritten von 1 mm verkleinert und die vorgenannten Schritte wiederholt bis Masse die gewünschte Schichtdicke aufwies. Zur Glättung der Oberfläche wurde der letzte Bearbeitungsschritt mit dem Kalander zweifach durchgeführt. Alternativ wurde dieser Schritt durch Ausüben von Druck durch eine Rolle durchgeführt. Die so hergestellten Verbundwerkstoffe zeigen eine im Wesentlichen parallele Ausrichtung jeweils zueinander benachbarter Teilchen des schichtartig aufgebauten, physikalisch wirkenden Treibmittels über das gesamte Trägermaterial, welches mittels visueller Inspektion unter einem Mikroskop festgestellt wurde.

Ferner wurde ein erfindungsgemäßer Verbundwerkstoff (Verbundwerkstoff 2) nach der obigen Beschreibung hergestellt, wobei als Formulierung die Rohmasse des Produkts CP 648-E der Firma Hilti verwendet wurde. Diese Formulierung umfasst ein Trägermaterial (wässrige Acrylat-Dispersion) sowie ein schichtartig aufgebautes, physikalisch wirkendes Treibmittel.

Zur Bestimmung der Expansionseigenschaften der hergestellten Verbundwerkstoffe wurden diese zunächst bis zur Gewichtskonstanz in einem Trockenofen (ca. 60 °C) getrocknet und anschließend wurde ein Gerät zur Funktionsersatzprüfung verwendet, mit der die Höhe der Expansion (Richtung der Expansion nach oben) ermittelt werden konnte. Zum Vergleich kann aus diesen Messungen der sogenannte Expansionsfaktor bestimmt werden, der den Quotient aus Expansionshöhe des Verbundwerkstoffes zum Gesamtgewicht des Verbundwerkstoffes darstellt. Das Messgerät zur Durchführung der Funktionsersatzprüfung bestand aus zwei horizontal angeordneten beheizbaren Platten. Die obere Platte wies ein konstantes Gewicht auf. Zu vermessende Verbundwerkstoffe (kreisförmig mit einem Durchmesser von 45 mm) wurden zwischen den beheizbaren Platten angeordnet und einem Temperaturprogramm ausgesetzt (Starttemperatur 50 °C, Heizrate 20 °C/min, Zwischentemperatur 100 °C (5 min), Heizrate 20 °C, Endtemperatur 500 °C (15 min Haltezeit). Die obere Platte war in der Lage Expansion in die Höhe aufzuzeichnen.

Um eine im Wesentlichen parallele Ausrichtung jeweils benachbarter Teilchen des schichtartig aufgebauten, physikalisch wirkenden Treibmittels über den gesamten Verbundwerkstoff aufzuzeigen, wurde der nachstehende Versuchsaufbau gewählt. Aus dem jeweiligen Verbundwerkstoff wurden 4,5 mm dicke Streifen geschnitten und diese wurden wie in Figur 6 dargestellt aufgerollt. Ein Streifen wurde so aufgerollt (Beispiel 2), dass die Expansion in x-Richtung (=Höhe) stattfindet und ein Streifen wurde um 90 ° gedreht (Beispiel 1), so dass die Expansion in die Fläche stattfindet.
Beispiel 1: gerollte Probe um 90 °, Annahme: vorwiegend flächige Expansion;
Beispiel 2: gerollte Probe, Annahme: Expansion vorwiegend in die Höhe;
Beispiel 3: ausgestanzte Referenzprobe, 45 mm Durchmesser.

Neben der Expansionshöhe wurde die Gesamtfläche der expandierten Proben anhand von Fotographien mittels Software bestimmt.

**Tabelle 2: Expansionshöhen und Gesamtflächen der Verbundwerkstoffe 1 und 2, geringfügige Abweichungen vom theoretischen Expansionsverhalten sind auf die Probenpräparation zurückzuführen.**

| Verbundwerkstoff | | Masse [g] | Probendicke [mm] | Expansionshöhe [mm] | Gesamtfläche [cm²] |
|---|---|---|---|---|---|
| **1** | Bsp. 1 | 5,55 | 5,0 | 7,12 | 137 |
| | Bsp. 2 | 5,77 | 5,0 | 11,70 | 89 |
| | Bsp. 3 | 5,76 | 5,0 | 17,31 | 71 |
| **2** | Bsp. 1 | 9,40 | 4,5 | 7,88 | 186 |
| | Bsp. 2 | 9,44 | 4,5 | 14,93 | 120 |
| | Bsp. 3 | 9,30 | 4,5 | 15,71 | 126 |

Es zeigte sich, dass alle Proben gemäß Beispiel 1 nur eine geringe Expansionshöhe aufwiesen, dafür eine hohe Zunahme der Gesamtfläche zeigten. Die Proben der Verbundwerkstoffe 1 und 2 gemäß den Beispielen 2 und 3 sind im Vergleich wesentlich stärker in die Höhe expandiert, wohingegen die Gesamtfläche deutlich kleiner blieb.

Ferner wurde mit dem oben beschriebenen Gerät zur Funktionsersatzprüfung die Expansionseigenschaften des erfindungsgemäßen Verbundwerkstoffes 2 im Vergleich zu den Expansionseigenschaften des käuflich erhältlichen Produkts FI-Block - Firewrap (erhältlich in 2 Dicken: 0,9 mm und 2,45 mm) der Fa. Sekisui, Japan untersucht. Dieses Produkt basiert auf einem polymeren Trägermaterial, in welches Blähgraphit eingebettet ist. Zur Bestimmung der Expansionseigenschaften des kommerziell erhältlichen Produktes FI-Block Firewrap wurden kreisrunde Proben mit Gewicht von 1,60 g (Dicke 0,9 mm) und 6,33 g (Dicke 2,45 mm) ausgestanzt Diese Proben wurden in das Gerät zur Funktionsersatzprüfung gelegt, das Temperaturprogramm gestartet und die Expansion nach oben gemessen. Die Ergebnisse im Vergleich zu den Ergebnissen der Expansion des erfindungsgemäßen Verbundwerkstoffes 2 sind in Figur 9 dargestellt. Es hat sich gezeigt, dass die nicht erfindungsgemäßen Proben eine wesentlich geringere Expansionshöhe zeigen als die erfindungsgemäßen Verbundwerkstoffe. Ferner lässt sich das Auftreten einer negativen Expansionshöhe bei den nicht erfindungsgemäßen Proben durch ein Aufschmelzen des polymeren Trägermaterials erklären, welches stattfindet bevor die Expansion des Blähgraphits stattfindet.

## Patentansprüche

1. Verbundwerkstoff (1) umfassend
i) ein Trägermaterial (2) und
ii) eine Vielzahl an Teilchen mindestens eines schichtartig aufgebauten, physikalisch wirkenden Treibmittels (3),
wobei über den gesamten Verbundwerkstoff (1) jeweils zueinander benachbarte Teilchen des schichtartig aufgebauten, physikalisch wirkenden Treibmittels (3) im Wesentlichen parallel zueinander angeordnet sind, wobei unter einem physikalisch wirkenden Treibmittel ein Material oder eine Komponente zu verstehen ist, die in der Lage ist, beim Überschreiten einer bestimmten Temperatur, der sogenannten Aktivierungstemperatur, physikalische Intumeszenz zu zeigen, und wobei mindestens 75 % der jeweils zueinander benachbarten Teilchen des schichtartig aufgebauten, physikalisch wirkenden Treibmittels eine parallele Anordnung zueinander zeigen.

2. Verbundwerkstoff (1) nach Anspruch 1, **dadurch gekennzeichnet, dass** das schichtartig aufgebaute, physikalisch wirkenden Treibmittel (3) in das Trägermaterial (2) eingebettet ist.

3. Verbundwerkstoff (1) nach Anspruch 2, **dadurch gekennzeichnet, dass** das schichtartig aufgebaute, physikalisch wirkende Treibmittel (3) gleichmäßig innerhalb des Trägermaterials (2) verteilt ist.

4. Verbundwerkstoff (1) nach Anspruch 2, **dadurch gekennzeichnet, dass** die Konzentration des schichtartig aufgebauten, physikalisch wirkenden Treibmittels (3) punktuell, musterartig, flächig und/oder sandwichartig innerhalb des Trägermaterials (2) variiert.

5. Verbundwerkstoff (1) nach Anspruch 1, **dadurch gekennzeichnet, dass** das schichtartig aufgebaute, physikalisch wirkende Treibmittel (3) auf einer oder mehreren Flächen der Oberfläche des Trägermaterials (2) aufgebracht ist.

6. Verbundwerkstoff (1) nach einem der vorhergehenden Ansprüche, **dadurch gekennzeichnet, dass** das schichtartig aufgebaute, physikalisch wirkende Treibmittel (3) in einer Menge von 10 bis 90 Gew.-%, bezogen auf das Gesamtgewicht des Festkörpergehaltes des Verbundwerkstoffs (1), im Verbundwerkstoff (1) enthalten ist.

7. Verbundwerkstoff (1) nach einem der vorhergehenden Ansprüche, **dadurch gekennzeichnet, dass** das Trägermaterial (2) einen Erweichungs- oder Zersetzungspunkt im Bereich von 80 °C bis 500 °C aufweist.

8. Verbundwerkstoff (1) nach einem der vorhergehenden Ansprüche, **dadurch gekennzeichnet, dass** das Trägermaterial (2) eine Polymerdispersion auf Wasser- oder Lösungsmittelbasis umfasst.

9. Verbundwerkstoff (1) nach einem der vorhergehenden Ansprüche, **dadurch gekennzeichnet, dass** das schichtartig aufgebaute, physikalisch wirkenden Treibmittel (3) eine mittlere Teilchengröße von 50 µm bis 4 mm aufweist.

10. Verbundwerkstoff (1) nach einem der vorhergehenden Ansprüche, **dadurch gekennzeichnet, dass** das schichtartig aufgebaute, physikalisch wirkende Treibmittel (3) aus der Gruppe bestehend aus Graphit-Interkallationsverbindungen, Schichtsilikat-Interkallationsverbindungen, und Mischungen davon ausgewählt ist.

11. Verbundwerkstoff (1) nach einem der vorhergehenden Ansprüche, **dadurch gekennzeichnet, dass** das Trägermaterial (2) mindestens eine organische und/oder anorganische Faser umfasst.

12. Verbundwerkstoff (1) nach einem der vorhergehenden Ansprüche, **dadurch gekennzeichnet, dass** der Verbundwerkstoff (1) eine maximale Schichtdicke von ≤ 10 mm aufweist.

13. Verbundwerkstoff (1) nach einem der vorhergehenden Ansprüche, **dadurch gekennzeichnet, dass** der Verbundwerkstoff (1) als formbare Masse oder als Formteil ausgebildet ist.

14. Brandschutzelement umfassend mindestens einen Verbundwerkstoff (1) nach einem der Ansprüche 1 bis 13.

15. Verwendung des Verbundwerkstoffes (1) nach einem der Ansprüche 1 bis 13 als Brandschutzelement zur Abdichtung von Durchgangsöffnungen und/oder Fugen in Bauelementen.

## Claims

1. Composite material (1) comprising
i) a carrier material (2) and
ii) a plurality of particles of at least one layered, physically acting blowing agent (3),
wherein, over the entire composite material (1), particles of the layered, physically acting blowing agent (3) that are adjacent to one another are arranged substantially in parallel with one another, wherein a physically active blowing agent is understood to be a material or a component that is able to exhibit physical intumescence when a certain temperature, the so-called activation temperature, is exceeded, and wherein at least 75% of the particles of the layered, physically active blowing agent that are adjacent to one another exhibit a parallel arrangement to one another.

2. Composite material (1) according to claim 1, **characterized in that** the layered, physically acting blowing agent (3) is embedded into the carrier material (2).

3. Composite material (1) according to claim 2, **characterized in that** the layered, physically acting blowing agent (3) is evenly distributed within the carrier material (2).

4. Composite material (1) according to claim 2, **characterized in that** the concentration of the layered, physically acting blowing agent (3) within the carrier material (2) is varied in the manner of spots, patterns, areas and/or sandwiches.

5. Composite material (1) according to claim 1, **characterized in that** the layered, physically acting blowing agent (3) is applied to one or more areas of the surface of the carrier material (2).

6. Composite material (1) according to any of the preceding claims, **characterized in that** the layered, physically acting blowing agent (3) is contained in the composite material (1) in an amount of from 10 to 90 wt.%, based on the total weight of the solids content of the composite material (1).

7. Composite material (1) according to any of the preceding claims, **characterized in that** the carrier material (2) has a softening or decomposition point in the range of from 80°C to 500°C.

8. Composite material (1) according to any of the preceding claims, **characterized in that** the carrier material (2) comprises a polymer dispersion based on water or solvent.

9. Composite material (1) according to any of the preceding claims, **characterized in that** the layered, physically acting blowing agent (3) has an average particle size of from 50 µm to 4 mm.

10. Composite material (1) according to any of the preceding claims, **characterized in that** the layered, physically acting blowing agent (3) is selected from the group consisting of graphite intercalation compounds, phyllosilicate intercalation compounds and mixtures thereof.

11. Composite material (1) according to any of the preceding claims, **characterized in that** the carrier material (2) comprises at least one organic and/or inorganic fiber.

12. Composite material (1) according to any of the preceding claims, **characterized in that** the composite material (1) has a maximum layer thickness of ≤ 10 mm.

13. Composite material (1) according to any of the preceding claims, **characterized in that** the composite material (1) is formed as a moldable mass or as a molded part.

14. Fire protection element comprising at least one composite material (1) according to any of claims 1 to 13.

15. Use of the composite material (1) according to any of claims 1 to 13 as a fire protection element for sealing passage openings and/or joints in structural elements.

## Revendications

1. Matériau composite (1) comprenant
i) un matériau support (2), et
ii) une pluralité de particules d'au moins un agent propulseur à action physique et à structure stratifiée (3),
dans lequel, sur l'ensemble du matériau composite (1), des particules respectivement adjacentes les unes aux autres de l'agent propulseur à action physique et à structure stratifiée (3) sont disposées sensiblement parallèlement les unes aux autres, dans lequel on entend par « agent propulseur à action physique » un matériau ou un composant qui est en mesure de présenter une intumescence physique lorsqu'une température déterminée, appelée température d'activation, est dépassée par le haut, et dans lequel au moins 75 % des particules respectivement adjacentes les unes aux autres de l'agent propulseur à action physique et à structure stratifiée présentent une disposition parallèle les unes aux autres.

2. Matériau composite (1) selon la revendication 1, **caractérisé en ce que** l'agent propulseur à action physique et à structure stratifiée (3) est encastré dans le matériau support (2).

3. Matériau composite (1) selon la revendication 2, **caractérisé en ce que** l'agent propulseur à action physique et à structure stratifiée (3) est réparti uniformément à l'intérieur du matériau support (2).

4. Matériau composite (1) selon la revendication 2, **caractérisé en ce que** la concentration de l'agent propulseur à action physique et à structure stratifiée (3) varie de manière ponctuelle, en termes de motif, en surface et/ou en sandwich à l'intérieur du matériau support (2).

5. Matériau composite (1) selon la revendication 1, **caractérisé en ce que** l'agent propulseur à action physique et à structure stratifiée (3) est appliqué sur une ou plusieurs surfaces de la surface du matériau support (2).

6. Matériau composite (1) selon l'une des revendications précédentes, **caractérisé en ce que** l'agent propulseur à action physique et à structure stratifiée (3) est contenu dans le matériau composite (1) en une quantité allant de 10 à 90 % en poids par rapport au poids total de la teneur en corps solides du matériau composite (1).

7. Matériau composite (1) selon l'une des revendications précédentes, **caractérisé en ce que** le matériau support (2) présente un point de ramollissement ou de décomposition allant de 80 °C à 500 °C.

8. Matériau composite (1) selon l'une des revendications précédentes, **caractérisé en ce que** le matériau support (2) comprend une dispersion de polymère à base d'eau ou de solvant.

9. Matériau composite (1) selon l'une des revendications précédentes, **caractérisé en ce que** l'agent propulseur à action physique et à structure stratifiée (3) présente une taille moyenne de particules allant de 50 µm à 4 mm.

10. Matériau composite (1) selon l'une des revendications précédentes, **caractérisé en ce que** l'agent propulseur à action physique et à structure stratifiée (3) est choisi dans le groupe constitué de composés d'intercalation de graphite, composés d'intercalation de silicate stratifié, et leurs mélanges.

11. Matériau composite (1) selon l'une des revendications précédentes, **caractérisé en ce que** le matériau support (2) comprend au moins une fibre organique et/ou inorganique.

12. Matériau composite (1) selon l'une des revendications précédentes, **caractérisé en ce que** le matériau composite (1) présente une épaisseur de couche maximale de ≤ 10 mm.

13. Matériau composite (1) selon l'une des revendications précédentes, **caractérisé en ce que** le matériau composite (1) est réalisé sous forme de masse pouvant être moulée ou de pièce moulée.

14. Élément de protection contre l'incendie comprenant au moins un matériau composite (1) selon l'une des revendications 1 à 13.

15. Utilisation du matériau composite (1) selon l'une des revendications 1 à 13 comme élément de protection contre l'incendie pour l'étanchéification d'ouvertures de passage et/ou de joints dans des éléments de construction.
